# EUROPEAN PATENT APPLICATION

(11) **EP 4 621 221 A1**
(43) Date of publication of application: **24.09.2025**
(21) Application number: 23910111.6
(22) Date of filing: 12.12.2023
(51) Int. Cl.: F03D 15/00, F03D 80/70, F16H 57/023

(54) **TRANSMISSION SYSTEM AND WIND GENERATING SET**

(30) Priority: 30.12.2022 CN 202211726428
(71) Applicant: GOLDWIND SCIENCE & TECHNOLOGY CO., LTD., Xinjiang 830026 (CN)
(72) Inventor: CHU, Xiaochao, Shanghai Road Economic & Technological Development Zone Urumqi, Xinjiang 830026 (CN); WANG, Zhongzhong, Shanghai Road Economic & Technological Development Zone Urumqi, Xinjiang 830026 (CN); CHU, Jiankun, Shanghai Road Economic & Technological Development Zone Urumqi, Xinjiang 830026 (CN); LIU, Liansheng, Shanghai Road Economic & Technological Development Zone Urumqi, Xinjiang 830026 (CN)
(74) Representative: Gulde & Partner
(86) International application number: PCT/CN2023/138233
(87) International publication number: WO 2024/140181

(57) **Abstract**

Embodiments of the present application provide a transmission system and a wind turbine, the transmission system is used for the wind turbine, and the transmission system includes: a transmission section including a first transmission shaft and a second transmission shaft that are distributed along a first direction and fixedly connected to each other; a fixation section fitting around an outside of at least part of the transmission section, in which the fixation section includes a bearing base and a gear box body that are distributed along the first direction and fixedly connected to each other; and a bearing provided between the transmission section and the fixation section, in which the transmission section is rotatable relatively to the fixation section through the bearing. The transmission system according to the embodiments of the present application has advantages, for example, stable transmission ratio, simple structure, and easy maintenance.

## Description

### CROSS-REFERENCE TO RELATED APPLICATION

The present application claims priority to Chinese Patent Application No 202211726428.5 entitled "TRANSMISSION SYSTEM AND WIND TURBINE" filed on December 30, 2022, which is incorporated herein by reference in its entirety.

### TECHNICAL FIELD

The present application relates to the technological field of wind power devices, and particularly, to a transmission system and a wind turbine.

### BACKGROUND

With the continuous development of wind power technology, demands of users for wind turbines are higher and higher. With the development trend of the wind turbines, power of a wind power generator will be greater and greater, and turbines with ultra-high power such as 12MW and 20MW will appear in the future. Blades of the wind turbine rotate to generate mechanical energy, and the mechanical energy is finally transmitted to an electric generator by a transmission apparatus to generate electricity. The transmission system has defects, such as complicated structure and high maintenance costs.

### SUMMARY

Embodiments of the present application provide a transmission system and a wind turbine, aiming to simplify the structure of the transmission system.

Embodiments of a first aspect of the present application provide a transmission system for a wind turbine, and the transmission system includes: a transmission section including a first transmission shaft and a second transmission shaft that are distributed along a first direction and fixedly connected to each other; a fixation section fitting around an outside of at least part of the transmission section, in which the fixation section includes a bearing base and a gear box body that are distributed along the first direction and fixedly connected to each other; and a bearing provided between the transmission section and the fixation section, in which the transmission section rotates relatively to the fixation section through the bearing.

According to embodiments of the first aspect of the present application, the transmission system includes the bearings in a number of two or more that are distributed at intervals along the first direction.

According to any one of the above embodiments of the first aspect of the present application, the bearing further includes a friction ring fixedly fitting around an outside of the transmission section, the bearing is provided between the friction ring and the fixation section, and the friction ring is slidingly fit with the fixation section.

According to any one of the above embodiments of the first aspect of the present application, the bearing base includes a first opening provided on a side thereof away from the gear box body and a first connection portion extending from the first opening to the first transmission shaft.

The friction ring includes a first friction ring fitting around the first transmission shaft and corresponding in position to the first connection portion, and the first friction ring is slidingly fit with the first connection portion.

According to any one of the above embodiments of the first aspect of the present application, the transmission system further includes a first sealing component provided on a side of the first friction ring away from the second transmission shaft, and the first sealing component is sealingly connected among the bearing base, the first friction ring and the first transmission shaft.

According to any one of the above embodiments of the first aspect of the present application, the bearing base includes a wall portion enclosing the first opening, the wall portion is provided with an oil discharge hole and an oil baffle plate, the oil discharge hole penetrates through the wall portion, the oil baffle plate is provided on an inner surface of the wall portion facing the transmission section and is formed to extend toward the transmission section, and the oil baffle plate is provided on a side of the oil discharge hole facing the first friction ring.

According to any one of the above embodiments of the first aspect of the present application, the first transmission shaft includes a second opening connected to the second transmission shaft, and the bearing base includes a second connection portion extending toward the second opening.

The friction ring further includes a second friction ring fitting around the second transmission shaft and corresponding in position to the second connection portion, and the second friction ring is slidingly fit with the second connection portion.

According to any one of the above embodiments of the first aspect of the present application, the first transmission shaft includes an outer peripheral surface facing the fixation section and a first end surface facing the second transmission shaft, the first end surface is recessed to form a limiting groove, and at least part of the second transmission shaft is limited in the limiting groove.

The second friction ring abuts against at least part of the outer peripheral surface, at least part of the first end surface, and at least part of an outer surface of the second transmission shaft.

According to any one of the above embodiments of the first aspect of the present application, the transmission section includes a first contact surface facing the fixation section, the fixation section includes a second contact surface facing the transmission section, the bearing further includes a first wear-resistant material layer that is applied on or fixed to the first contact surface and slidingly fit with the second contact surface, or applied on or fixed to the second contact surface and slidingly fit with the first contact surface.

According to any one of the above embodiments of the first aspect of the present application, one of the transmission section and the fixation section is provided with a groove, the other is provided with a protrusion, the bearing is provided between the groove and the protrusion, the groove includes a bottom wall surface and a first side wall surface connected to a periphery of the bottom wall surface, and the first side wall surface is formed to extend from the bottom wall surface along a radial direction of the transmission section.

The protrusion includes a top surface and a second side wall surface connected to a periphery of the top surface, and the second side wall surface is formed to extend along a radial direction of the fixation section.

The bearing includes a second wear-resistant material layer that is applied on or fixed to one of the top surface and the bottom wall surface and is slidingly fit with the other, and/or is applied on or fixed to one of the first side wall surface and the second side wall surface and is slidingly fit with the other.

According to any one of the above embodiments of the first aspect of the present application, the bearing base is provided with a ground foot, and the bearing and the ground foot at least partially overlap along the first direction.

According to any one of the above embodiments of the first aspect of the present application, the bearing base is provided with an oil filling hole, through which oil is filled into the bearing.

Embodiments of a second aspect of the present application further provide a wind turbine including the transmission system according to any one of the above embodiments of the first aspect.

In the transmission system according to the embodiments of the present application, the transmission system includes the transmission section, the fixation section, and the bearing, the transmission section includes the first transmission shaft and the second transmission shaft that are distributed along the first direction and fixedly connected to each other, and the first transmission shaft and the second transmission shaft are fixedly connected to each other, ensuring a stable transmission ratio between the first transmission shaft and the second transmission shaft. The fixation section fits around the outside of at least part of the transmission section for providing a protection to the transmission section. The fixation section includes the bearing base and the gear box body that are distributed along the first direction and fixedly connected to each other, and the gear box body and the bearing base are fixedly connected relative to each other, ensuring stability of a position of the gear box body relative to the bearing base. The bearing is provided between the transmission section and the fixation section, so that the transmission section can rotate relatively to the fixation section through the bearing, preventing rotation of the transmission section from being transmitted to the fixation section, and ensuring stability of a position of the fixation section. The transmission system according to the embodiments of the present application has advantages, for example, its transmission ratio is stable, its structure is simple, and maintaining the transmission system is easy.

### BRIEF DESCRIPTION OF THE DRAWINGS

Other features, objects and advantages of the present application will become more apparent from reading the following detailed description of the non-limiting embodiments with reference to the accompanying drawings, in which the same or similar reference numerals represent the same or similar features.
Fig. 1 is a schematic structural view of a transmission system according to embodiments of the present application;
Fig. 2 is a partial enlarged schematic structural view of Fig. 1;
Fig. 3 is a partial enlarged schematic structural view of another place in Fig. 1; and
Fig. 4 is a partial enlarged schematic structural view of Fig. 1 according to another embodiment.

Reference signs:
100: Transmission section; 101: First contact surface; 102: Protrusion; 102a: Top surface; 102b: Second side wall surface; 110: First transmission shaft; 111: Second opening; 112: Outer peripheral surface; 113: First end surface; 114: Limiting groove; 115: First protruding portion; 116: Third connection portion; 116a: First connection hole; 120: Second transmission shaft; 121: Second connection hole;
200: Fixation section; 201: Second contact surface; 202: Groove; 202a: Bottom wall surface; 202b: First side wall surface; 210: Bearing base; 211: First opening; 212: First connection portion; 212a: Second end surface; 213: Wall portion; 214: Oil discharge hole; 215: Oil baffle plate; 216: Second connection portion; 217: Ground foot; 218: Oil filling hole; 220: Gear box body;
300: Bearing; 310: First wear-resistant material layer; 320: Second wear-resistant material layer;
400: Friction ring; 410: First friction ring; 420: Second friction ring; 421: Bulk body; 422: Second protruding portion;
500: First sealing component.

### DETAILED DESCRIPTION

Features and exemplary embodiments of various aspects of the present application will be described in detail below. Numerous specific details are set forth in the following detailed description to provide a thorough understanding of the present application. However, it will be apparent to a person skilled in the art that the present application may be practiced without some of these specific details. The following description of the embodiments is only to provide a better understanding of the present application by illustrating examples of the present application. In the accompanying drawings and the following description, at least some of well-known structures and techniques are not shown so as to avoid unnecessary obscurity of the present application. In addition, size of some structures may be exaggerated for clarity. Furthermore, features, structures, or characteristics described below may be combined in one or more embodiments by any suitable manner.

In the description of the present application, it should be noted that, unless otherwise specified, the term "a plurality of" indicates two or more; the terms "upper", "lower", "left", "right", "inner", "outer", and the like indicate orientations or positional relationships for facilitating and simplifying description of the present application, and do not indicate or imply that the involved devices or elements must have such a particular orientation, or must be constructed and operated in such a particular orientation, and thus should not be construed to limit the present application. In addition, the terms "first", "second", and the like are merely used for the purpose of description and should not be interpreted to indicate or imply relative importance.

The directional words appearing in the following description indicate directions shown in the drawings and do not limit the specific structure in the embodiments of the present application. In the description of the present application, it should be further noted that, unless otherwise clearly specified and limited, the terms "installation" and "connection" should be understood in a broad sense, for example, the "connection" may refer to a fixed, a detachable or an integrated connection; and it may refer to a director an indirect connection. For a person skilled in the art, the specific meaning of the terms mentioned above in the present application may be understood in accordance with specific situations.

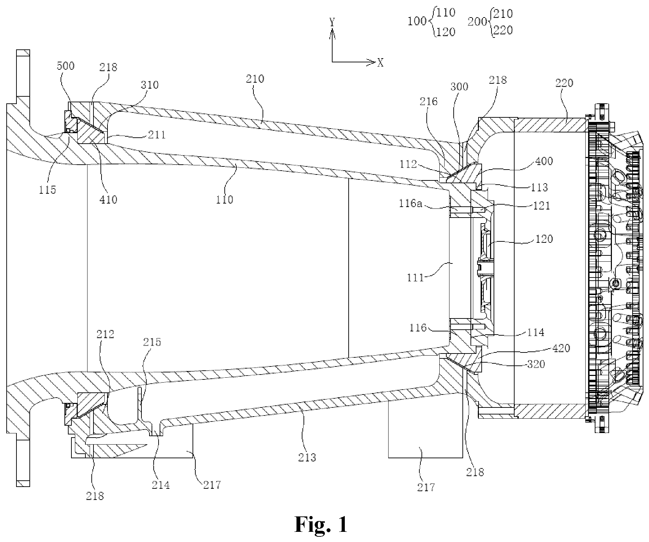

For a better understanding of the present application, a transmission system and a wind turbine according to embodiments of the present application will be described in detail below with reference to Fig. 1 to Fig. 4.

With reference to Fig. 1, Fig. 1 is a cross-sectional view of a transmission system according to the embodiments of the present application.

As shown in Fig. 1, embodiments of a first aspect of the present application provide a transmission system for a wind turbine, the transmission system includes a transmission section 100, a fixation section 200, and a bearing 300, and the transmission section 100 includes a first transmission shaft 110 and a second transmission shaft 120 that are distributed along a first direction (direction X in Fig. 1) and fixedly connected to each other; the fixation section 200 fits around an outside of at least part of the transmission section 100, and the fixation section 200 includes a bearing base 210 and a gear box body 220 that are distributed along the first direction and fixedly connected to each other; and the bearing 300 is provided between the transmission section 100 and the fixation section 200, and the transmission section 100 is rotatable relatively to the fixation section 200 through the bearing 300.

In the transmission system according to the embodiments of the present application, the transmission system includes the transmission section 100, the fixation section 200, and the bearing 300, the transmission section 100 includes the first transmission shaft 110 and the second transmission shaft 120 that are distributed along the first direction and fixedly connected to each other, and the first transmission shaft 110 and the second transmission shaft 120 are fixedly connected to each other, ensuring a stable transmission ratio between the first transmission shaft 110 and the second transmission shaft 120. The fixation section 200 fits around the outside of at least part of the transmission section 100 for providing protection to the transmission section 100. The fixation section 200 includes the bearing base 210 and the gear box body 220 that are distributed along the first direction and fixedly connected to each other, and the gear box body 220 and the bearing base 210 are fixedly connected relative to each other, ensuring stability of a position of the gear box body 220 relative to the bearing base 210. The bearing 300 is provided between the transmission section 100 and the fixation section 200, so that the transmission section 100 can rotate relatively to the fixation section 200 through the bearing 300, preventing rotation of the transmission section 100 from being transmitted to the fixation section 200, and ensuring stability of a position of the fixation section 200. The transmission system according to the embodiments of the present application has advantages, for example, stable transmission ratio, simple structure, and easy maintenance.

The first transmission shaft 110 is provided in various manners. For example, the first transmission shaft 110 is a main shaft structure, and the first transmission shaft 110 is used for transmitting kinetic energy generated when blades of a wind turbine generator rotate. The second transmission shaft 120 is provided in various manners. For example, the second transmission shaft 120 is an input shaft of a gear box, so that it can be ensured that forces more balanced are applied to the fixation section 200 in a rotation process of the transmission section 100.

A number of the bearings 300 may be various. For example, one bearing 300 may be provided, and the one bearing 300 may be provided between the first transmission shaft 110 and the bearing base 210, so that the first transmission shaft 110 can rotate relatively to the bearing base 210 through the bearings 300. Sizes of the first transmission shaft 110 and the bearing base 210 are relatively great, and the bearing 300 is provided between the first transmission shaft 110 and the bearing 300, so that it can be ensured that forces more balanced are applied to the fixation section 200 in a rotation process of the transmission section 100.

In some optional embodiments, two or more bearings 300 may be provided, and two or more bearings 300 are provided at intervals along the first direction. Two or more bearings 300 are provided, so that force applied to the fixation section 200 can be ensured to be more balanced, and stability of a position of the transmission system is ensured.

Optionally, two or more bearings 300 are provided at intervals between the bearing base 210 and the first transmission shaft 110, so as not to affect rotation of the second transmission shaft 120 and normal operation of the gear box.

Optionally, with further reference to Fig. 1, the bearing 300 of the wind turbine further includes a friction ring 400 fixedly fitting around an outside of the transmission section 100, and the friction ring 400 is slidingly fit with the fixation section 200, so that the friction ring 400 can rotate relatively to the fixation section 200 under a condition that the rotating transmission section 100 drives the friction ring 400 to rotate.

In these optional embodiments, the friction ring 400 is provided, so that, on the one hand, a friction damage to the transmission section 100 when rotating can be reduced, and, on the other hand, under a condition that the friction damage occurs to the friction ring 400, it is convenient to replace the friction ring 400 separately, thereby reducing maintenance costs of the transmission system. Moreover, it is also convenient to perform a special treatment such as a wear-resistance treatment on the friction ring 400 based on a rotation need. For example, a heat treatment or other pretreatments may be performed on an outer surface of the friction ring 400, or the friction ring 400 may be manufactured using a material such as a special material of structural steel and alloy steel that is different from that of the transmission portion 100, so that the friction ring 400 has a desired mechanical property and a wear-resistant property to improve service life of the friction ring 400 and service life of the whole transmission system.

Optionally, the friction ring 400 may be connected to the transmission section 100 by an interference fit, a threaded connection, or a standard component such as a bolt, as long as the friction ring 400 can be fixedly connected to outside the transmission section 100.

Optionally, under a condition that the bearing 300 is provided between the first transmission shaft 110 and the bearing base 210, the friction ring 400 fits around the outside of the first transmission shaft 110.

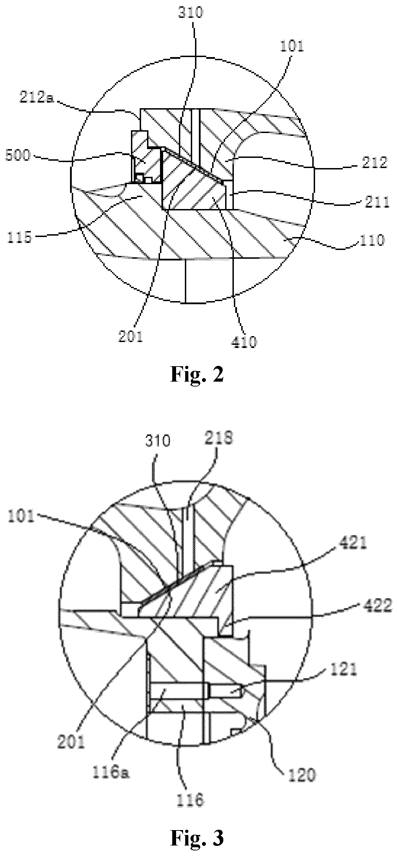

With reference to Fig. 1 and Fig. 2, Fig. 2 is a partial enlarged schematic structural view of Fig. 1.

In some optional embodiments, as shown in Fig. 1 and Fig. 2, the bearing base 210 includes a first opening 211 provided on a side thereof away from the gear box body 220 and a first connection portion 212 extending from the first opening 211 to the first transmission shaft 110; the friction ring 400 includes a first friction ring 410 fitting around the first transmission shaft 110 and corresponding in position to the first connection portion 212; and the first friction ring 410 is slidingly fit with the first connection portion 212.

In these optional embodiments, the first connection portion 212 is provided on the first opening 211 on a side of the bearing base 210 away from the gear box body 220, the first friction ring 410 is slidingly fit with the first connection portion 212, and the first transmission shaft 110 can rotate relatively to the first connection portion 212 through the first friction ring 410. On the one hand, the first friction ring 410 is used for achieving a connection between the bearing base 210 and the first transmission shaft 110 to prevent the first opening 211 of the bearing base 210 from being inclined, and ensure stability of the bearing base 210 on a radial position; on the other hand, the first friction ring 410 can rotate the first transmission shaft 110 relative to the bearing base 210 to prevent the bearing base 210 from rotating after the first transmission shaft 110 under a condition that the first transmission shaft 110 rotates, and ensure stability of the bearing base 210 on a circumferential position of the first transmission shaft 110. There are various radial directions, and a direction Y in Fig. 1 shows one radial direction.

In some optional embodiments, as shown in Fig. 1 and Fig. 2, the transmission system further includes a first sealing component 500 provided on a side of the first friction ring 410 away from the second transmission shaft 120, the first sealing component 500 sealingly connected among the bearing base 210, the first friction ring 410, and the first transmission shaft 110. The first sealing component 500 is provided, so that a gap between the first friction ring 410 and the bearing base 210 can be sealed, thereby reducing leakage of grease in the bearing base 210.

Optionally, the first sealing component 500 is sealingly connected among the first connection portion 212, the first friction ring 410, and the first transmission shaft 110 to seal a gap between the first connection portion 212 and the first friction ring 410 resulting from providing the bearing 300.

Optionally, a second end surface 212a is provided on a side of the first connection portion 212 away from the gear box body 220 and has a first step groove communicated with the first opening 211, and at least part of the first sealing portion 500 is located in the first step groove, so as to further improve a sealing property of the transmission system.

Optionally, a first protruding portion 115 protrudes from an outer peripheral surface of the first transmission shaft 110, and is located on a side of the first friction ring 410 away from the gear box body 220, and the first friction ring 410 protrudes from the first protruding portion 115 along a side away from a central axis of the first transmission shaft 110. The first sealing component 500 is sealingly connected among an outer surface of the first protruding portion 115 away from the first transmission shaft 110, an end surface of the first friction ring 410 facing the first protruding portion 115, and the first step groove.

In some optional embodiments, with further reference to Fig. 1, the bearing base 210 includes a wall portion 213 enclosing the first opening 211, the wall portion 213 is provided with an oil discharge hole 214 and an oil baffle plate 215, the oil discharge hole 214 penetrates through the wall portion 213, the oil baffle plate 215 is provided on an inner surface of the wall portion 213 facing the transmission section 213 and is formed to extend toward the transmission section 100, and the oil baffle plate 215 is provided on a side of the oil discharge hole 214 facing the first friction ring 410.

In these optional embodiments, the wall portion 213 encloses an accommodation space for accommodating at least part of the first transmission shaft 110 and the first opening 211 communicated with a first accommodation space, and the wall portion 213 is provided with the penetrating oil discharge hole 214, so that excess grease in the bearing base 210 may be discharged through the oil discharge hole 214. The wall portion 213 is further provided with the oil baffle plate 215, the oil baffle plate 215 is located on a side of the oil discharge hole 214 facing the first friction ring 410, and the oil baffle plate 215 can block at least part of the grease, thereby reducing a speed of the grease flowing out from a side where the first friction ring 410 is located, and soaking the first friction ring 410 in the grease. For example, under a condition that the transmission system is used for the wind turbine, and the wind turbine is in a halt state, part of the first friction ring 410 can contact with lubricating oil, so that a lubricating performance of the first friction ring 410 is improved, thereby improving service life of the first friction ring 410.

Optionally, the oil baffle plate 215 is spaced from the outer surface of the first transmission shaft 110 to prevent the first transmission shaft 110 from rubbing against the oil baffle 215 when rotating. Optionally, the oil baffle plate 215 is in a ring shape and extends along a circumference of the first transmission shaft 110 by a predetermined distance, so that more grease can be blocked on a side of the oil baffle plate 215 facing the first friction ring 410.

With reference to Fig. 1 and Fig. 3, Fig. 3 is a partial enlarged schematic structural view of another place in Fig. 1.

In some optional embodiments, as shown in Fig. 1 and Fig. 3, the first transmission shaft 110 includes a second opening 111 connected to the second transmission shaft 120, and the bearing base 210 includes a second connection portion 216 extending toward the second opening 111; the friction ring 400 further includes a second friction ring 420 fitting around the second transmission shaft 120 and corresponding to a position of the second connection portion 216, and the second friction ring 420 is slidingly fit with the second connection portion 216.

In these optional embodiments, the second friction ring 420 is provided near the second opening 111 on a side of the first transmission shaft 110 facing the second transmission shaft 120, and the first transmission shaft 110 can rotate relatively to the second connection portion 216 through the second friction ring 420. On the one hand, the second friction ring 420 is used for achieving a connection between the second transmission shaft 120 and the bearing base 210 to reduce a problem of inclining of the first transmission shaft 110 near the second opening 111, and ensure the stability of the bearing base 210 on the radial position. On the other hand, the second friction ring 420 can rotate the first transmission shaft 110 relative to the bearing base 210 to prevent the bearing base 210 from rotating after the first transmission shaft 110 rotates, and ensure the stability of the bearing base 210 on the circumferential position of the first transmission shaft 110.

Optionally, the friction ring 400 may only include the first friction ring 410 or the second friction ring 420. Optionally, the friction ring 400 may include both the first friction ring 410 and the second friction ring 420 to ensure balance of force applied to the bearing base 210 along the first direction, and ensure stability of the transmission system.

Optionally, the first transmission shaft 110 and the bearing base 210 may have equal cross sections along the first direction, or cross sections of the first transmission shaft 110 and the bearing 300 are gradually reduced along a direction close to the second transmission shaft 120 and the gear box body 220. A size of the first friction ring 410 or the second friction ring 420 may be the same or different, and under a condition that the first transmission shaft 110 and the bearing base 210 have equal cross sections along the first direction, the size of the first friction ring 410 or the second friction ring 420 may be the same. Under a condition that the cross sections of the first transmission shaft 110 and the bearing 300 are gradually reduced along the direction close to the second transmission shaft 120 and the gear box body 220, a radial dimension of the first friction ring 410 may be greater than a radial dimension of the second friction ring 420.

In some optional embodiments, as shown in Fig. 1 and Fig. 3, the first transmission shaft 110 includes an outer peripheral surface 112 facing the fixation section 200 and a first end surface 113 facing the second transmission shaft 120, the first end surface 113 is recessed to form a limiting groove 114, and at least part of the second transmission shaft 120 is limited in the limiting groove 114; the second friction ring 420 abuts against at least part of the outer peripheral surface 112, at least part of the first end surface 113, and at least part of an outer surface of the second transmission shaft 120.

In these optional embodiments, the second end surface 212a of the first transmission shaft 110 is recessed to form the limiting groove 114, and at least part of the second transmission shaft 120 is limited in the limiting groove 114, thereby ensuring stability of a position of the second transmission shaft 120, and ensuring coaxiality of the second transmission shaft 120 and the first transmission shaft 110. The second friction ring 420 abuts against the outer peripheral surface 112, the first end surface 113, and the outer surface of part of the second transmission shaft 120, thereby ensuring a sealing property of a position where the second friction ring 420 is located.

Optionally, the limiting groove 114 is communicated with the second opening 111, so that the second transmission shaft 120 may abut against a bottom wall of the limiting groove 114. Optionally, the first transmission shaft 110 is provided with a third connection portion 116, the third connection portion 116 is connected to an inner wall surface of the first transmission shaft 110 and is formed to extend toward the central axis of the first transmission shaft 110, an end surface of the third connection portion 116 facing the second transmission shaft 120 forms the limiting groove 114, and the second transmission shaft 120 abuts against a side of the third connection portion 116 along the first direction.

Optionally, with further reference to Fig. 1 and Fig. 3, the third connection portion 116 is provided with a first connection hole 116a, the second transmission shaft 120 is provided with a second connection hole 121, the transmission system further includes a connection component, and the connection component is located in the first connection hole 116a and the second connection hole 121 to connect the first transmission shaft 110 to the second transmission shaft 120.

Optionally, with further reference to Fig. 1 and Fig. 3, the second friction ring 420 includes a bulk body 421 and a second protruding portion 422 provided on the bulk body 421 and extending toward an end surface of the first transmission shaft 110, and the second protruding portion 422 abuts against the first end surface 113 of the first transmission shaft 110 and the outer surface of the second transmission shaft 120 to improve a sealing property among the second friction ring 420, the first transmission shaft 110 and the second transmission shaft 120.

The bearing 300 may be provided in various manners. For example, the bearing 300 is a sliding bearing, and as shown in Fig. 2 and Fig. 3, the bearing 300 may be installed between the fixation section 200 and the transmission section 100 in a face-to-face manner. In other embodiments, the bearing 300 may be installed between the fixation section 200 and the transmission section 100 in a back-to-back manner.

In some optional embodiments, as shown in Fig. 2 and Fig. 3, the transmission section 100 includes a first contact surface 101 facing the fixation section 200, the fixation section 200 includes a second contact surface 201 facing the transmission section 100, the first contact surface 101 and the second contact surface 201 are planes, the bearing 300 further includes a first wear-resistant material layer 310 that is applied on or fixed to the first contact surface 101 and slidingly fit with the second contact surface 201, or applied on or fixed to the second contact surface 201 and slidingly fit with the first contact surface 101. In these optional embodiments, the first wear-resistant material layer 310 may be installed on the first contact surface 101 or the second contact surface 201, which simplifies the structure and eases the maintenance.

Optionally, under a condition that the transmission system includes the first connection portion 212 and the first friction ring 410, one of the first contact surface 101 and the second contact surface 201 may be provided on the first connection portion 212, and the other may be provided on the first friction ring 410. Under a condition that the transmission system includes the second connection portion 216 and the second friction ring 420, the first contact surface 101 and the second contact surface 201 may also be provided on the second connection portion 216 and the second friction ring 420.

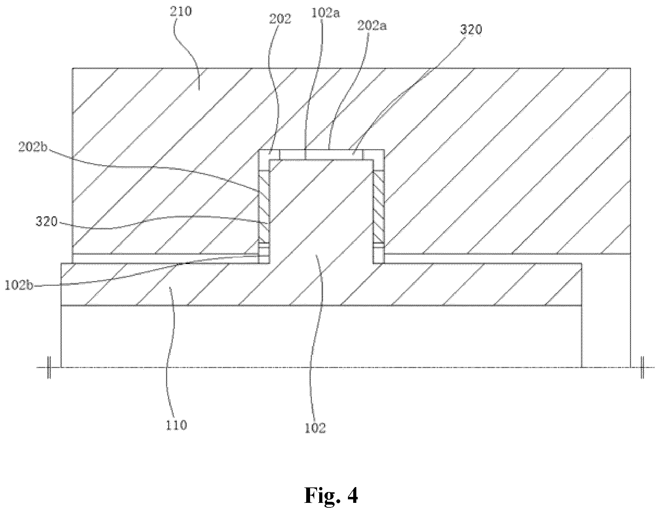

With reference to Fig. 1 and Fig 4, Fig. 4 is a partial enlarged schematic structural view in Fig. 1 in another embodiment.

In some other optional embodiments, as shown in Fig. 1 and Fig 4, one of the transmission section 100 and the fixation section 200 is provided with a groove 202, the other is provided with a protrusion 102, and the bearing 300 is provided between the groove 202 and the protrusion 102. In these optional embodiments, the fit of the protrusion 102 and the groove 202 can provide a limitation for the fixation section 200 and the transmission section 100 along the first direction, thereby ensuring stability of positions of the fixation section 200 and the transmission section 100 along the first direction.

Optionally, under a condition that the transmission system includes the first connection portion 212 and the first friction ring 410, one of the protrusion 102 and the groove 202 may be provided on the first connection portion 212, and the other may be provided on the first friction ring 410. Under a condition that the transmission system includes the second connection portion 216 and the second friction ring 420, the projection 102 and the groove 202 may also be provided on the second connection portion 216 and the second friction ring 420.

Optionally, one or more different sets of bearings 300 may be provided between the same set of groove 202 and protrusion 102. For example, the groove 202 includes a bottom wall surface 202a and a first side wall surface 202b connected to a periphery of the bottom wall surface 202a, and the first side wall surface 202b is formed to extend from the bottom wall surface 202a along a radial direction of the transmission section 100; the protrusion 102 includes a top surface 102a and a second side wall surface 102b connected to a periphery of the top surface 102a, and the second side wall surface 102b is formed to extend along a radial direction of the fixation section 200; and the bearing 300 includes a second wear-resistant material layer 320 that is applied on or fixed to one of the top surface 102a and the bottom wall surface 202a and is slidingly fit with the other, for example, the second wear-resistant material layer 320 is applied on or fixed to the top surface 102a and is slidingly fit with the bottom wall 202a, or is applied on or fixed to the bottom wall 202a and is slidingly fit with the top surface 102a. And/or, the second wear-resistant material layer 320 is applied on or fixed to one of the first side wall surface 202b and the second side wall surface 102b and is slidingly fit with the other, for example, the second wear-resistant material layer 320 is applied on or fixed to the first side wall surface 202b and is slidingly fit with the second side wall surface 102b, or is applied on or fixed to the second side wall surface 102b and is slidingly fit with the first side wall face 202b.

In some optional embodiments, still referring to Fig 1, the bearing base 210 is provided with a ground foot 217, and the ground foot 217 is used for connecting the bearing base 210 to a predetermined position and supporting the bearing base 210 on the predetermined position. Force applied to a position where the ground foot 217 is located is relatively great, and the bearing 300 and the ground foot 217 at least partially overlap along the first direction, so that the bearing 300 can be provided near a position where relatively great force is applied to the bearing base 210, ensuring stability of a position of the bearing base 210.

Optionally, still referring to Fig 1, the bearing base 210 is provided with an oil filling hole 218, through which oil is filled into the bearing 300. Optionally, under a condition that the bearing 300 includes the first friction ring 410 and the second friction ring 420, the oil filling holes 218 corresponding to the first friction ring 410 and the second friction ring 420 are provided on the bearing base 210, so that the first friction ring 410 and the second friction ring 420 can be filled with oil through the oil filling holes 218. One or more oil filling holes 218 may be provided for one bearing 300 correspondingly.

There are various types of bearings 300, and as described above, the bearing 300 may include the sliding bearing, or the bearing 300 may include a radial bearing 330 and a thrust bearing 340. The bearing 300 may also be an elastic pad sliding bearing structure, a ball and socket supported sliding bearing structure, a rib supported sliding bearing structure, and the like.

Optionally, the bearing 300 may be a PEEK bearing. The bearing 300 includes a wear-resistant material layer (such as the first wear-resistant material layer 310 or the second wear-resistant material layer 320), and the structure of the transmission system can be further simplified by providing the wear-resistant material layer between the fixation section 200 and the transmission section 100. Materials of the wear-resistant material layer include, for example, one or more materials selected from polybenzimidazole (PBI), polyimide (PI), Polyamide-imide (PAI), polyether-ether-ketone (PEEK), polyphenylene sulfide (PPS), polyphenylene sulfone resins (PPSU) and polyvinylidene difluoride (PVDF). That is, materials of the first wear-resistant material layer 310 or the second wear-resistant material layer 320 include, for example, one or more materials selected from polybenzimidazole (PBI), polyimide (PI), Polyamide-imide (PAI), polyether-ether-ketone (PEEK), polyphenylene sulfide (PPS), polyphenylene sulfone resins (PPSU) and polyvinylidene difluoride (PVDF).

Embodiments of a second aspect of the present application provide a wind turbine including the transmission system according to any one of the above embodiments. Since the generator set according to the embodiments of the present application includes the above wind turbine, the generator set according to the embodiments of the present application has the beneficial effects of any one of the above transmission systems, which will not be described in detail here.

Although the present application has been described with reference to the preferred embodiments, various modifications may be made thereto and components thereof may be replaced with their equivalents without departing from the scope of the present application. In particular, various technical features described in various embodiments can be combined in any manner as long as there is no structural conflict. The present application is not limited to the specific embodiments described herein, and includes all technical solutions that fall within the scope of the claims.

## Claims

1. A transmission system for a wind turbine, comprising:
a transmission section comprising a first transmission shaft and a second transmission shaft that are distributed along a first direction and fixedly connected to each other;
a fixation section fitting around an outside of at least part of the transmission section, wherein the fixation section comprises a bearing base and a gear box body that are distributed along the first direction and fixedly connected to each other; and
a bearing provided between the transmission section and the fixation section, wherein the transmission section is rotatable relatively to the fixation section through the bearing.

2. The transmission system according to claim 1, wherein the transmission system comprises the bearings in a number of two or more that are distributed at intervals along the first direction.

3. The transmission system according to claim 1, wherein the bearing further comprises a friction ring fixedly fitting around the outside of the transmission section, and the friction ring is slidingly fit with the fixation section.

4. The transmission system according to claim 3, wherein
the bearing base comprises a first opening provided on a side thereof away from the gear box body and a first connection portion extending from the first opening to the first transmission shaft; and
the friction ring comprises a first friction ring fitting around the first transmission shaft and corresponding in position to the first connection portion, and the first friction ring is slidingly fit with the first connection portion.

5. The transmission system according to claim 4, further comprising a first sealing component provided on a side of the first friction ring away from the second transmission shaft, wherein the first sealing component is sealingly connected among the bearing base, the first friction ring, and the first transmission shaft.

6. The transmission system according to claim 4, wherein the bearing base comprises a wall portion enclosing the first opening, the wall portion is provided with an oil discharge hole and an oil baffle plate, the oil discharge hole penetrates through the wall portion, the oil baffle plate is provided on an inner surface of the wall portion facing the transmission section and is formed to extend toward the transmission section, and the oil baffle plate is provided on a side of the oil discharge hole facing the first friction ring.

7. The transmission system according to claim 3, wherein
the first transmission shaft comprises a second opening connected to the second transmission shaft, and the bearing base comprises a second connection portion extending toward the second opening; and
the friction ring further comprises a second friction ring fitting around the second transmission shaft and corresponding in position to the second connection portion, and the second friction ring is slidingly fit with the second connection portion.

8. The transmission system according to claim 7, wherein
the first transmission shaft comprises an outer peripheral surface facing the fixation section and a first end surface facing the second transmission shaft, the first end surface is recessed to form a limiting groove, and at least part of the second transmission shaft is limited in the limiting groove; and
the second friction ring abuts against at least part of the outer peripheral surface, at least part of the first end surface and at least part of an outer surface of the second transmission shaft.

9. The transmission system according to claim 1, wherein the transmission section comprises a first contact surface facing the fixation section, the fixation section comprises a second contact surface facing the transmission section, and the bearing further comprises a first wear-resistant material layer that is applied on or fixed to the first contact surface and slidingly fit with the second contact surface, or applied on or fixed to the second contact surface and slidingly fit with the first contact surface.

10. The transmission system according to claim 1, wherein one of the transmission section and the fixation section is provided with a groove, and the other is provided with a protrusion,
the groove comprises a bottom wall surface and a first side wall surface connected to a periphery of the bottom wall surface, and the first side wall surface is formed to extend from the bottom wall surface along a radial direction of the transmission section;
the protrusion comprises a top surface and a second side wall surface connected to a periphery of the top surface, and the second side wall surface is formed to extend along a radial direction of the fixation section; and
the bearing comprises a second wear-resistant material layer that is applied on or fixed to one of the top surface and the bottom wall surface and is slidingly fit with the other, and/or is applied on or fixed to one of the first side wall surface and the second side wall surface and is slidingly fit with the other.

11. The transmission system according to claim 1, wherein the bearing base is provided with a ground foot, and the bearing and the ground foot at least partially overlap along the first direction.

12. The transmission system according to claim 1, wherein the bearing base is provided with an oil filling hole, through which oil is filled into the bearing.

13. A wind turbine, comprising the transmission system according to any one of claims 1-12.
